(19) Europäisches Patentamt
European Patent Office
Office européen des brevets

(11) **EP 3 812 433 A1**

(12) **EUROPEAN PATENT APPLICATION**
published in accordance with Art. 153(4) EPC

(43) Date of publication:
**28.04.2021 Bulletin 2021/17**

(51) Int Cl.:
*C09D 133/00* *(2006.01)*    *C09D 5/02* *(2006.01)*
*C09D 7/63* *(2018.01)*    *C09D 175/04* *(2006.01)*

(21) Application number: **19821929.7**

(86) International application number:
**PCT/JP2019/022796**

(22) Date of filing: **07.06.2019**

(87) International publication number:
**WO 2019/244679 (26.12.2019 Gazette 2019/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.06.2018 JP 2018117304**

(71) Applicant: **DAINICHISEIKA COLOR & CHEMICALS
MFG. CO., LTD.
Chuo-ku
Tokyo 103-8383 (JP)**

(72) Inventors:
• **SAKAI, Yosuke**
  **Tokyo 103-8383 (JP)**
• **NAGATA, Eisuke**
  **Tokyo 103-8383 (JP)**

(74) Representative: **Gille Hrabal
Partnerschaftsgesellschaft mbB
Patentanwälte
Brucknerstraße 20
40593 Düsseldorf (DE)**

(54) **AQUEOUS COATING AGENT**

(57)    An aqueous coating agent comprising an emulsion comprising an acrylic polymer A having an acid number of 50 mgKOH/g or less and a Tg of less than 50°C, a polymer B comprising one or more polymers selected from the group consisting of an acrylic polymer and an urethane polymer having an acid number of 60 mgKOH/g or more, a surfactant and a film-forming aid, wherein a mass ratio of the acrylic polymer A to the polymer B [A/B] is 35/65 or more and 65/35 or less.

EP 3 812 433 A1

**Description**

Technical Field

The present invention relates to an aqueous coating agent.

Background Art

Conventionally, in order to hide defects which impair appearance designability of a plastic molding such as a weld line and a flow mark generated in a plastic molding, a coating agent using an organic solvent has been used.
For example, PTL 1 proposes a method of eliminating a weld line of an injection-molded product, in which a non-aqueous printing ink is directly printed on an injection-molded product by screen printing method so as to make a weld line generated in the injection molded product invisible.

Citation List

Patent Literature

PTL1: JP 58-42438 A

Summary of Invention

Technical Problem

On the other hand, as for a coating agent using an organic solvent, volatilized organic solvent has a harmful effect on a human body and the environment, and thus an aqueous coating agent has been required in recent years which has a relatively reduced load on a human body and the environment and which is environmentally compatible.
The present invention was made in view of the above situation, and the object of the present invention is to provide an aqueous coating agent which has a reduced influence on a human body and the environment and, in addition, has excellent wettability, wherein a coating film thereof after coating has excellent concealing property, adhesive property and abrasion resistance.

Solution to Problem

The present invention is based on the findings that an aqueous coating agent comprising an emulsion comprising an acrylic polymer A having an acid number of 50 mgKOH/g or less and Tg (glass transition temperature) of less than 50°C, a polymer B comprising one or more polymer selected from the group consisting of an acrylic polymer and an urethane polymer having an acid number of 60 mgKOH/g or more, a surfactant and a film-forming aid, wherein a mass ratio of the acrylic polymer A to the polymer B [A/B] is 35/65 or more and 65/35 or less, has a reduced influence on a human body and the environment and, in addition, exhibits excellent wettability, and that a coating film obtained after coating the aqueous coating agent has excellent concealing property, adhesive property and abrasion resistance.
Specifically, the present invention provides the following [1] to [15].

[1] An aqueous coating agent comprising an emulsion comprising an acrylic polymer A having an acid number of 50 mgKOH/g or less and a Tg of less than 50°C, a polymer B comprising one or more polymers selected from the group consisting of an acrylic polymer and an urethane polymer having an acid number of 60 mgKOH/g or more, a surfactant and a film-forming aid, wherein a mass ratio of the acrylic polymer A to the polymer B [A/B] is 35/65 or more and 65/35 or less.
[2] The aqueous coating agent according to the above [1], wherein the acid number of the acrylic polymer A is 25 mgKOH/g or less.
[3] The aqueous coating agent according to the above [1] or [2], wherein the Tg of the acrylic polymer A is 10°C or less.
[4] The aqueous coating agent according to any one of the above [1] to [3], wherein the acid number of the polymer B is 100 mgKOH/g or more.
[5] The aqueous coating agent according to any one of the above [1] to [4], wherein the polymer B is an acrylic polymer.
[6] The aqueous coating agent according to any one of the above [1] to [5], wherein the emulsion comprises a hydrazide compound.
[7] The aqueous coating agent according to any one of the above [1] to [6], wherein a boiling point of the film-forming aid is 220°C or less.

[8] The aqueous coating agent according to any one of the above [1] to [7], wherein the film-forming aid is a glycol compound.

[9] The aqueous coating agent according to any one of the above [1] to [8], wherein the film-forming aid is propylene glycol.

[10] The aqueous coating agent according to any one of the above [1] to [9], wherein the surfactant is a fluoridated surfactant.

[11] The aqueous coating agent according to any one of the above [1] to [9], wherein the surfactant is a silicone surfactant.

[12] The aqueous coating agent according to any one of the above [1] to [11], wherein the aqueous coating agent further comprises a slipping agent.

[13] The aqueous coating agent according to any one of the above [1] to [12], wherein the aqueous coating agent is used for spray coating.

[14] The aqueous coating agent according to any one of the above [1] to [13], wherein the aqueous coating agent is used for a plastic molding.

[15] The aqueous coating agent according to the above [14], wherein the plastic molding is one or more selected from the group consisting of a polystyrene resin, a polycarbonate resin, a polyester resin, a polyamide resin, a polyvinyl chloride resin.

[16] A paint for a plastic by means of the aqueous coating agent according to any one of the above [1] to [15].

Advantageous Effects of Invention

According to the present invention, an aqueous coating agent which has a reduced influence on a human body and the environment and, in addition, has excellent wettability can be provided. By using the aqueous coating agent of the present invention, for example, a coating film can be obtained which has excellent concealing property for defects which impair appearance designability of a product such as a weld line and a flow mark generated in a plastic molding, and has excellent adhesive property and abrasion resistance.

Description of Embodiments

Hereinafter, the aqueous coating agent of the present invention will be described in detail.

[Aqueous coating agent]

The aqueous coating agent of the present invention comprises an emulsion comprising an acrylic polymer A having an acid number of 50 mgKOH/g or less and Tg of less than 50°C, a polymer B comprising one or more polymer selected from the group consisting of an acrylic polymer and an urethane polymer having an acid number of 60 mgKOH/g or more, a surfactant and a film-forming aid, wherein a mass ratio of the acrylic polymer A to the polymer B [A/B] is 35/65 or more and 65/35 or less.

<Emulsion comprising acrylic polymer A>

The emulsion used in the present invention contains an acrylic polymer A.

The emulsion may contain a polymer other than the acrylic polymer A if needed, in addition to the acrylic polymer A.

Examples of the polymer other than the acrylic polymer A include, for example, an acrylic polymer other than polymer A, vinyl acetate polymer, styrene/butadiene polymer, vinyl chloride polymer, vinylidene chloride polymer, olefin polymer, alkyd polymer, urethane polymer and polyester polymer.

The emulsion may contain a surfactant used for forming the emulsion.

The emulsion may contain other components such as stabilizer, neutralizer and crosslinking agent if needed, in an amount within a range not inhibiting achievement of the purpose of the present invention.

The emulsion preferably contains a hydrazide compound as a crosslinking agent so that the coating film from the aqueous coating agent has excellent abrasion resistance. When a hydrazide compound is contained, self-crosslinking of a polymer contained in the aqueous coating agent is facilitated by drying the coating film of the aqueous coating agent. As a result, strength of the coating film is enhanced, and abrasion resistance is enhanced.

Examples of a hydrazide compound include, for example, adipic acid dihydrazide, sebacic acid dihydrazide, dodecanedioic acid dihydrazide, isophthalic acid dihydrazide and salicylic acid hydrazide. Among these, adipic acid dihydrazide is preferable.

The content of the emulsion in the aqueous coating agent is preferably 10 mass% or more, more preferably 20 mass% or more, further preferably 25 mass% or more, and preferably 45 mass% or less, more preferably 35 mass% or less, further preferably 30 mass% or less so that the coating film from the aqueous coating agent has excellent concealing property and adhesive property.

[Acrylic polymer A]

The acrylic polymer A comprises one or more acrylic polymer. The acrylic polymer A has an acid number of 50 mgKOH/g or less, and Tg of less than 50°C.

Examples of the acrylic polymer A used for the present invention include, for example, a polymer of a (meth)acrylic acid ester. Examples of a polymer of a (meth)acrylic acid ester include a polymer of a (meth)acrylic acid alkyl ester such as methyl (meth)acrylate, ethyl (meth)acrylate, propyl (meth)acrylate, butyl (meth)acrylate, hexyl (meth)acrylate, octyl (meth)acrylate, dodecyl (meth)acrylate and stearyl (meth)acrylate.

Among these, methyl (meth)acrylate and butyl (meth)acrylate are preferable so that the coating film from the aqueous coating agent has excellent concealing property and adhesive property.

The acrylic polymer A may be a copolymer of two or more monomers. As monomers of the copolymer, one or more selected from the group consisting of a (meth)acrylic acid ester, acrylic acids, vinyl esters, olefins, styrenes, crotonic acids, itaconic acids, maleic acids, fumaric acids, acrylamides, allyl compounds, vinyl ethers, vinyl ketones, vinyl heterocyclic compounds, glycidyl esters and unsaturated nitriles etc. can be used in combination with a (meth)acrylic acid ester monomer.

The acid number of the acrylic polymer A is preferably 5 mgKOH/g or more, more preferably 10 mgKOH/g or more, further preferably 13 mgKOH/g or more, further more preferably 15 mgKOH/g or more so that the coating film from the aqueous coating agent has excellent water resistance, and is 50 mgKOH/g or less, preferably 40 mgKOH/g or less, more preferably 30 mgKOH/g or less, further preferably 25 mgKOH/g or less, further more preferably 20 mgKOH/g or less so that the coating film from the aqueous coating agent has excellent adhesive property.

Tg of the acrylic polymer A is less than 50°C. When the acrylic polymer A has such low Tg, the coating film from the aqueous coating agent has excellent adhesive property. When the acrylic polymer having low Tg is used, the coating film thereof has generally poor abrasion resistance, however when the aqueous coating agent has the composition of the present invention, the coating film also having excellent abrasion resistance can be obtained.

Tg of the acrylic polymer A is preferably -10°C or more, more preferably 0°C or more, further preferably 3°C or more so that the coating film from the aqueous coating agent has excellent abrasion resistance, and is less than 50°C, preferably 40°C or less, more preferably 20°C or less, further preferably 10°C or less, further more preferably 8°C or less so that the coating film from the aqueous coating agent has excellent adhesive property.

The content of the acrylic polymer A relative to the active components of the aqueous coating agent is preferably 25 mass% or more, more preferably 30 mass% or more, further preferably 33 mass% or more so that the coating film from the aqueous coating agent has excellent concealing property and adhesive property, and is preferably 45 mass% or less, more preferably 40 mass% or less, further preferably 38 mass% or less so that the coating film from the aqueous coating agent has excellent abrasion resistance. Herein, the active components refer to components which are the remainder of the aqueous coating agent from which solvents such as water has been removed.

The content of the acrylic polymer A in the emulsion is preferably 20 mass% or more, more preferably 30 mass% or more, further preferably 40 mass% or more, and preferably 70 mass% or less, more preferably 60 mass% or less, further preferably 50 mass% or less, from the viewpoint of dispersibility in the emulsion.

<polymer B>

The polymer B comprises one or more selected from the group consisting of an acrylic polymer and an urethane polymer having an acid number of 60 mgKOH/g or more.

The polymer B may contain other components such as a polymer other than the acrylic polymer and the urethane polymer having an acid number of 60 mgKOH/g or more, if needed, in an amount within a range not inhibiting the effect of the present invention.

[Acrylic polymer comprised in polymer B]

Examples of an acrylic polymer comprised in polymer B include, for example, a polymer of a (meth)acrylic acid ester. Examples of a polymer of a (meth)acrylic acid ester include a polymer of an alkyl (meth)acrylate such as methyl (meth)acrylate, ethyl (meth)acrylate, propyl (meth)acrylate, butyl (meth)acrylate, hexyl (meth)acrylate, 2-ethylhexyl (meth)acrylate, octyl (meth)acrylate, dodecyl (meth)acrylate, stearyl (meth)acrylate, cyclohexyl (meth)acrylate and isobornyl (meth)acrylate; hydroxyalkyl (meth)acrylate such as 2-hydroxyethyl (meth)acrylate, 2-hydroxypropyl (meth)acrylate and 3-hydroxypropyl (meth)acrylate; alkylene glycol mono(meth)acrylate such as diethylene glycol mono(meth)acrylate, triethylene glycol mono(meth)acrylate, polyethylene glycol mono(meth)acrylate, propylene glycol mono(meth)acrylate, dipropylene glycol mono(meth)acrylate, tripropylene glycol mono(meth)acrylate, tetramethylene ether glycol mono(meth)acrylate, mono(meth)acrylate of random polymer glycol or block polymer glycol of polyethylene oxide-polypropylene oxide, and mono(meth)acrylate of random polymer glycol or block polymer glycol of polyethylene oxide-polytetramethylene ether; (meth)acrylic acid alkyl ester such as glycidyl (meth)acrylate and benzyl (meth)acrylate.

Examples of other (meth)acrylic acid ester include, for example, alicyclic group-containing monomer such as cyclopentyl (meth)acrylate, cyclohexyl (meth)acrylate, isobornyl (meth)acrylate, tricyclodecanyl (meth)acrylate and adamantyl (meth)acrylate; (meth)acrylic acid aminoalkyl ester monomer such as aminoethyl (meth)acrylate, dimethylaminoethyl (meth)acrylate and butylaminoethyl (meth)acrylate; (meth)acrylic acid aminoalkylamide monomer such as aminoethyl (meth)acrylamide, dimethylaminomethyl (meth)acrylamide and methylaminopropyl (meth)acrylamide; vinyl cyanide monomer such as (meth)acrylonitrile and $\alpha$-cloro acrylonitril; saturated aliphatic carboxylic acid vinyl ester monomer such as vinyl acetate and vinyl propionate.

The acrylic polymer comprised in the polymer B may be a copolymer of two or more monomers. As a monomer of the copolymer, one or more selected from the group consisting of a (meth)acrylic acid ester monomer, acrylic acids, vinyl esters, olefins, styrenes, crotonic acids, itaconic acids, maleic acids, fumaric acids, acrylamides, allyl compounds, vinyl ethers, vinyl ketones, vinyl heterocyclic compounds, glycidyl esters and unsaturated nitriles etc. may be used in combination with a (meth)acrylic acid ester monomer.

[Urethane polymer comprised in polymer B]

The urethane polymer comprised in the polymer B can be obtained by, for example, reacting a polyisocyanate with a polyol.

Examples of polyisocyanate include an aliphatic polyisocyanate and an aromatic polyisocyanate.

Examples of an apliphatic polyisocyanate include, for example, a polyisocyanate having a chain structure such as tetramethylene diisocyanate, hexamethylene diisocyanate, dodecamethylene diisocyanate, 2,2,4-trimethylhexamethylene diisocyanate, 2,4,4-trimethylhexamethylene diisocyanate, lysine diisocyanate, 2-methylpentane-1,5-diisocyanate, 3-methylpentane-1 and 5-diisocyanate; a polyisocyanate having a cyclic structure such as isophorone diisocyanate, hydrogenated xylylene diisocyanate, 4,4'-dicyclohexylmethane diisocyanate, 1,4-cyclohexane diisocyanate, methylcyclohexylene diisocyanate and 1,3-bis(isocyanate methyl) cyclohexane.

Examples of an aromatic polyisocyanate include, for example, tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, dialkyldiphenylmethane diisocyanate, tetraalkyldiphenylmethane diisocyanate and $\alpha,\alpha,\alpha',\alpha'$-tetramethylxylylene diisocyanate.

Examples of polyol include, for example, polyether polyol, polyester polyol and polycarbonate polyol.

The acid number of the acrylic polymer and the urethane polymer comprised in the polymer B is 60 mgKOH/g or more, preferably 100 mgKOH/g or more, more preferably 130 mgKOH/g or more, further preferably 140 mgKOH/g or more, further more preferably 150 mgKOH/g or more so that the coating film from the aqueous coating agent has excellent abrasion resistance, and preferably 200 mgKOH/g or less, more preferably 180 mgKOH/g or less, further preferably 170 mgKOH/g or less, further more preferably 160 mgKOH/g or less from the viewpoint of water resistance of the coating film from the aqueous coating agent.

Tg of the acrylic polymer and the urethane polymer comprised in the polymer B is preferably 0°C or more, more preferably 5°C or more, further preferably 10°C or more so that the coating film from the aqueous coating agent has excellent abrasion resistance, and preferably 30°C or less, more preferably 20°C or less, further preferably 15°C or less so that the coating film from the aqueous coating agent has excellent adhesive property.

The content of the acrylic polymer and the urethane polymer in the polymer B is preferably 5 mass% or more, more preferably 10 mass% or more, further preferably 15 mass% or more, and preferably 40 mass% or less, more preferably 30 mass% or less, further preferably 25 mass% or less.

The content of the polymer B relative to the active components of the aqueous coating agent is preferably 20 mass% or more, more preferably 25 mass% or more, further preferably 30 mass% or more so that the coating film from the aqueous coating agent has excellent abrasion resistance, and preferably 45 mass% or less, more preferably 40 mass% or less, further preferably 35 mass% or less so that the coating film from the aqueous coating agent has excellent adhesive property. Herein, the active components refer to the components which are the remainder of the aqueous coating agent from which solvents such as water have been removed.

The polymer B preferably comprises an acrylic polymer.

The mass ratio [A/B] of the acrylic polymer A to the polymer B is 35/65 or more and 65/35 or less. Herein, the mass ratio refers to the ratio of the active components after removing solvents such as water.

The mass ratio [A/B] of the acrylic polymer A to the polymer B is preferably 40/60 or more, more preferably 45/55 or more, further preferably 48/52 or more and preferably 60/40 or less, more preferably 57/43 or less, further preferably 55/45 or less so that the coating film from the aqueous coating agent has excellent concealing property, adhesive property and abrasion resistance.

The total content of the acrylic polymer A and the polymer B relative to the active components of the aqueous coating agent is preferably 50 mass% or more, more preferably 60 mass% or more, further preferably 65 mass% or more, and preferably 90 mass% or less, more preferably 80 mass% or less, further preferably 75 mass% or less so that the coating film from the aqueous coating agent has excellent concealing property, adhesive property and abrasion resistance.

<Surfactant>

Examples of a surfactant include, for example, an anion surfactant, a cation surfactant, a nonionic surfactant, an amphoteric surfactant, a fluorinated surfactant and a silicone surfactant.

A fluorinated surfactant and silicone surfactant are preferable so that the aqueous coating agent exhibits excellent wettability and that the coating film from the aqueous coating agent has good concealing property.

A fluorinated surfactant is not particularly limited as long as it has a perfluoroalkyl group, but perfluoroalkane, perfluoroalkylcarboxylic acid, perfluoroalkylsulfonic acid and perfluoroalkyl ethylene oxide adduct etc. can be exemplified.

A silicone surfactant is not particularly limited, but for example, polyether-modified polydimethylsiloxane, polyetherester-modified polydimethylsiloxane, hydroxyl group-containing polyether-modified polydimethylsiloxane, acryl group-containing polyether-modified polydimethylsiloxane, acryl group-containing polyester-modified polydimethylsiloxane, perfluoropolyether-modified polydimethylsiloxane, perfluoropolyester-modified polydimethylsiloxane, or silicone-modified acrylic compound etc. can be exemplified.

These surfactants can be used alone or in combination of two or more.

The content of a surfactant relative to the active components of the aqueous coating agent is preferably 1 mass% or more, more preferably 3 mass% or more, further preferably 5 mass% or more, and preferably 15 mass% or less, more preferably 10 mass% or less, further preferably 8 mass% or less so that the aqueous coating agent exhibits excellent wettability and that the coating film from the aqueous coating agent has good concealing property.

<Film-forming aid>

A film-forming aid used in the present invention is a hydrophilic compound having a function of facilitating film-forming when a coating film is formed using an aqueous coating agent. When the aqueous coating agent comprises a film-forming aid, a coating film having excellent adhesive property and abrasion resistance can be obtained without heat treatment.

Examples of a film-forming aid include, for example, a glycol compound, an alcohol compound and a pyrrolidone compound. Examples of a glycol compound include propylene glycol, diethylene glycol, propylene glycol, triethylene glycol and polyethylene glycol. Among these, propylene glycol is preferable.

Examples of an alcohol compound include methanol, ethanol, isopropanol, n-butanol and n-hexanol. Among these, methanol is preferable.

Examples of a pyrrolidone compound include N-methylpyrrolidone, N-ethylpyrrolidone, N-propylpyrrolidone, N-isopropylpyrrolidone, N-butylpyrrolidone, N-t-butylpyrrolidone, N-pentylpyrrolidone, N-hexylpyrrolidone, N-heptylpyrrolidone, N-cyclohexylpyrrolidone, N-octylpyrrolidone, N-(2-ethylhexyl) pyrrolidone, N-phenylpyrrolidone, N-benzylpyrrolidone, phenethylpyrrolidone, 2-methoxyethylpyrrolidone, 2-methoxypropylpyrrolidone, 2-hydroxypropylpyrrolidone, vinylpyrrolidone and 2-pyrrolidone. Among these, N-methylpyrrolidone is preferable.

These film-forming aids can be used alone or in combination of two or more.

The boiling point of a film-forming aid is preferably 220°C or less, more preferably 210°C or less from the viewpoint of reduction in drying time of the coating film from the aqueous coating agent.

The content of the film-forming aid in the aqueous coating agent is preferably 0.5 mass% or more, more preferably 1.0 mass% or more, further preferably 1.2 mass% or more and preferably 10.0 mass% or less, more preferably 5.0 mass% or less, further preferably 3.0 mass% or less so that the aqueous coating agent exhibits excellent wettability and so that drying time of the coating film from the aqueous coating agent is reduced.

The content of the film-forming aid relative to the active components of the aqueous coating agent is preferably 1 mass% or more, more preferably 2 mass% or more, further preferably 3 mass% or more, and preferably 10 mass% or less, more preferably 7 mass% or less, further preferably 5 mass% or less so that the aqueous coating agent exhibits excellent wettability and so that drying time of the coating film from the aqueous coating agent is reduced.

The aqueous coating agent preferably further contains a slipping agent. When a slipping agent is contained, abrasion resistance of the coating film from the aqueous coating agent is enhanced.

Examples of a slipping agent include, for example, a modified high density polyethylene wax, a modified polyethylene wax, acrylic beads comprising (meth)acrylic polymer microparticles and urethane beads comprising urethane microparticles. Among these, a modified high density polyethylene wax and a modified polyethylene wax are preferable.

These slipping agents can be used alone or in combination of two or more.

The aqueous coating agent may further contain a colorant. When a colorant is contained, the aqueous coating agent can be used as a paint.

A colorant used in the present invention is not particularly limited, and a known colorant can be used, and an organic pigment, an inorganic pigment, a dye and a brightening agent etc, can be exemplified.

Examples of an organic pigment include, for example, phthalocyanine, benzimidazoline, azo, azomethineazo, azomethine, anthraquinone, perinone-perylene, indigo-thioindigo, dioxazine, quinacridone, isoindoline and isoindolinone pigments and a carbon black pigment etc., and examples of an inorganic pigment include, for example, extender pigment, titanium oxide pigment, iron oxide pigment and spinel pigment etc. More specifically, insoluble azo pigments such as Toluidine Red, Toluidine Maroon, Hanza Yellow, Benzidine Yellow and Pyrazolone Red, soluble azo pigments such as Lithol Red, Helio Bordeaux, Pigment Scarlet and Permanent Red 2B, phthalocyanine pigments such as Phthalocyanine Blue and Phthalocyanine Green, quinacridone pigments such as Quinacridon Red and Quinacridon Magenta, perylene pigments such as Perylene Red and Perylene Scarlet, isoindolinone pigments such as Isoindolinone Yellow and Isoindolinone Orange, pyranthrone pigments such as Pyranthrone Red and Pyranthrone Orange, thioindigo pigments, condensed azo pigments, benzimidazolone pigments, Quinophthalone Yellow, Nickel Azo Yellow, Perinone Orange, Anthrone Orange, dianthraquinonyl red and Dioxazine Violet can be exemplified.

As a dye, for example, a conventionally known dye such as a direct dye, a basic dye, a cationic dye, an acidic dye, a mordant dye, an acidic mordant dye, a sulfur dye, a naphthol dye, a disperse dye and a reactive dye can be used.

The type, particle size and treatment method of the above pigment or dye used are preferably selected depending on the application of the colorant, and in the cases of requiring concealing power, desiring transparency of the product to be colored, and something else, the type and particle size etc. may be appropriately selected.

A brightening agent is a pigment providing a surface of a molding with retroreflection property and light scattering property and having effective brightening property as a material the hue of which changes depending on the angle of observation. Examples of a pearl mica pigment include, for example, natural mica, synthetic mica, titanium oxide, zinc oxide, tin oxide, aluminum oxide, silicon oxide, iron oxide, copper oxide, nickel oxide and cobalt oxide.

The aqueous coating agent may contain other components such as a stabilizer, a neutralizer, a crosslinking agent, a wetting agent, a leveling agent, a matting agent, a thickener, a preservative etc. if needed, in an amount within a range not inhibiting achievement of the purpose of the present invention.

[Plastic molding]

When the aqueous coating agent of the present invention is coated on a plastic molding, for example, defects which impair appearance designability of the product such as a weld line and a flow mark generated in the plastic molding can be hidden. The aqueous coating agent of the present invention exhibits good wettability for a plastic molding. Furthermore, the coating film from the aqueous coating agent of the present invention has excellent adhesive property to a plastic molding and excellent abrasion resistance.

Examples of a plastic molding include, for example, polystyrene resin, polycarbonate resin, polyester resin, polyamide resin, polyvinyl chloride resin, polyacetal resin and polyolefin resin. Among these, from the viewpoint of adhesive property between a plastic molding and the coating film from the aqueous coating agent, polystyrene resin, polycarbonate resin, polyester resin, polyamide resin and polyvinyl chloride resin are preferable, and polyamide resin and polyvinyl chloride resin are more preferable.

[Coating method of aqueous coating agent]

A coating method of the aqueous coating agent of the present invention is not particularly limited, and curtain flow coating, dip coating, spray coating, UV coating etc. can be exemplified.

Among these, spray coating is preferable from the viewpoint of easiness of coating.

Example

Next, the present invention will be described in more detail with reference to Examples, but the present invention is not by any means limited by these Examples.

[Measurement]

<Acid number of acrylic polymer A and polymer B>

The acid number was measured according to JIS K 0070:1992. 0.5 g of emulsion was precisely weighed, diluted with 100 ml of ion exchanged water, several drops of 0.1% solution of phenolphthalein in ethanol was added as an indicator to the diluted emulsion, which was then titrated with 0.1N solution of potassium hydroxide in ethanol to calculate the acid number. Only ion exchanged water was titrated separately in the similar way to confirm that the acid number was 0.

$$\text{Solvent for measurement: toluene/ethanol} = 1/1 \text{ (mass ratio)}$$

<Tg of acrylic polymer A and polymer B>

0.02g of solid resin obtained by drying was weighed as a sample using an aluminum pan, and heated to 150°C, then cooled to -130°C at a temperature decreasing speed of 10°C/min using a differential scanning colorimeter "DSC-8230" (manufactured by Rigaku Corporation).
Then, the sample was heated to 100°C at a temperature increasing speed of 10°C/min and the calorie was measured.
The inflection point of the endothermic peak was read and determined as Tg.

<Volume average particle size of acrylic polymer A>

The volume average particle size was measured using a measurement apparatus of an average particle size by light scattering "Photal PAR-IIIS" (manufactured by Otsuka Electronics Co., Ltd.)

<Measurement of weight average molecular weight of acrylic polymer A>

The weight average molecular weight was measured by gel permeation chromatography (GPC) method described below.
As the emulsion comprising the acrylic polymer A, the sample solution was prepared using N-methyl-2-pyrrolidone so as to obtain the concentration of 0.14 mass%. As the polymer B, the sample solution was prepared using N-methyl-2-pyrrolidone so as to obtain the concentration of 0.08 mass%.
GPC (apparatus: "HLC-8320GPC" (manufactured by Tosoh Corporation) using a Standard polystyrene, column: "TSKgel SuperMultiporeHZ column" (manufactured by Tosoh Corporation)) were used, N-methyl-2-pyrrolidone was allowed to flow as an eluent at a flow rate of 0.3 to 0.35ml/min, and the column was made into a steady state in a thermostatic chamber at 25°C, into which 100 μL of prepared sample solution was injected to measure the molecular weight.

[Evaluation]

<Appearance>

The appearance of the coating film formed using the aqueous coating agent under each condition shown in Table 3 and 4 was evaluated visually according to the following evaluation criteria.
Good: a weld line and a flow mark are hidden, and a coating film is uniformly formed (good wettability).
Poor: a weld line or a flow mark is not hidden, or a coating film is not uniformly formed (poor wettability). Or otherwise, a weld line or a flow mark is not hidden, nor is a coating film uniformly formed.

<Drying property>

After the aqueous coating agent was applied, it was dried under each condition shown in Table 3 and 4, and the time required for drying was measured.
The time required for drying refers to the time since the aqueous coating agent is applied until the aqueous coating agent does not adhere to a finger by drying the coating film even if the coating film is touched by a finger.
When the time required for drying is shorter, drying property is better.

<Adhesive property>

The adhesive property between the coating film formed using the aqueous coating agent under each condition and the resin was evaluated based on the standard of JIS K5600-5-6-1999 relating to cross cut method.

Cross cut guide 1.0 (manufactured by Kotec Ltd.)) was used as an equipment for marking-off.

The evaluation criteria of adhesive property are shown in Table 1.

Table 1

| Classification | Description |
|---|---|
| 0 | An edge of a cut part is completely smooth and peeling is not observed in any cell of a lattice. |
| 1 | A small peeling of the coating film is observed at a crossover point of cut. Crosscut parts which are significantly influenced are not apparently more than 5 %. |
| 2 | The coating film is peeled along an edge of a cut part and/or at a crossover point. Crosscut parts which are influenced are apparently more than 5 % but not more than 15 %. |
| 3 | Large peeling of the coating film is generated partially or in whole along an edge of a cut part and/or at some parts of a cell. Crosscut parts which are influenced are apparently more than 15 % but not more than 35 %. |
| 4 | Large peeling of the coating film is generated partially or in whole along an edge of a cut part and/or at several cells. Crosscut parts which are influenced are apparently more than 35 % but not more than 65 %. |
| 5 | The degree of peeling is higher than the level which is classified as level 4. |

<Abrasion resistance>

The abrasion resistance of the coating film formed using the aqueous coating agent under each condition was evaluated based on the old standard of JIS K5400 relating to a pencil scratch test.

The pencil scratch test was conducted two days after formation of the coating film.

The abrasion resistance is better in the order of HB>B>2B>3B>4B>5B>6B.

<Durability>

The coating film formed using the aqueous coating agent under each condition was left still under the condition of temperature of 60°C and humidity of 90 %RH for 24 hours. The abrasion resistance of the coating film was evaluated based on the old standard of JIS K5400 relating to a pencil scratch test.

When no change was observed in the results of pencil scratch tests for the coating film two days after formation of the coating film and for the coating film after being left still under the condition of temperature of temperature of 60°C and humidity of 90 %RH for 24 hours, the durability was determined as excellent.

[Manufacturing of aqueous coating agent]

Manufacturing Example 1

2.93 parts of pigment dispersion "AC-FK52" (manufactured by Dainichiseika Color & Chemicals Mfg. Co., Ltd.), 1.5 parts of propylene glycol as a film-forming aid, 26.28 parts of emulsion as an emulsion component comprising the acrylic polymer a, 58.49 parts of polymer b as a polymer B component, 2.00 parts of water, 5.00 parts of "CERAFLOUR 988" (manufactured by BYK-Chemie GmbH) as a slipping and matting agent, 0.10 parts of "MEGAFAC F444" (manufactured by DIC Corporation) as a surfactant, 2.50 parts of "BYK-345" (manufactured by BYK-Chemie GmbH), 1.00 part of "PRIMAL G111E" as a thickener and 0.20 parts of "San-ai bac AS-30" as a preservative (manufactured by SAN-AI OIL CO., LTD.) were mixed, and the obtained mixture was stirred at 1500 rpm for 10 minutes using a homogenizer "T.K. HOMODISPER MODEL 2.5" (manufactured by PRIMIX Corporation) to obtain the aqueous coating agent of the present invention. The composition ratio of the raw materials are shown in Table 2.

<Acrylic polymer a>

Polymer composition: methyl methacrylate polymer, butyl acrylate polymer, butyl methacrylate polymer

Acid number: 18 mgKOH/g
Tg: 5°C
Volume average particle size: 50 to 70nm
Weight average molecular weight: 200000

<Polymer b>

Polymer composition: methyl methacrylate polymer, butyl acrylate polymer, butyl methacrylate polymer

Acid number: 157 mgKOH/g
Tg: 13°C
Weight average molecular weight: 250000

Manufacturing Examples 2 to 8

The aqueous coating agent was obtained in the similar way to Manufacturing Example 1 except that the composition of the raw materials was changed as shown in Table 2.

Table 2 (1/2)

| | Product name or component name or type | Manufacturer | Ratio of active component in each component *1 (mass%) | Manufacturing Example 1 | | Manufacturing Example 2 | | Manufacturing Example 3 | | Manufacturing Example 4 | |
|---|---|---|---|---|---|---|---|---|---|---|---|
| | | | | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) |
| Pigment dispersion | AC-FK52 (content of pigment 14%, dispersion for inkjet) | Dainichiseika Color & Chemicals Mfg. Co., Ltd. | 17.5 | 2.93 | 1.59 | | | 2.93 | 1.59 | 2.93 | 1.59 |
| Film-forming aid | Propylene glycol | | 100.0 | 1.50 | 4.65 | 1.50 | 4.73 | | | | |
| | Methanol | | 100.0 | | | | | 1.50 | 4.65 | | |
| | N-methyl pyrrolidone | | 100.0 | | | | | | | 1.50 | 4.65 |
| Emulsion | Acrylic polymer a | - | 43.4 | 26.28 | 35.36 | 26.28 | 35.93 | 26.28 | 35.36 | 26.28 | 35.36 |
| Polymer B | Polymer b | - | 19.5 | 58.49 | 35.36 | 58.49 | 35.93 | 58.49 | 35.36 | 58.49 | 35.36 |
| Surfactant | MEGAFAC F444 (fluorinated surfactant) | DIC Corporation | 100.0 | 0.10 | 0.31 | 0.10 | 0.32 | 0.10 | 0.31 | 0.10 | 0.31 |
| | BYK-345 (Polyether siloxane) | BYK-Chemie GmbH | 87.5 | 2.50 | 6.78 | 2.50 | 6.89 | 2.50 | 6.78 | 2.50 | 6.78 |
| Solvent | Water | | | 2.00 | | 4.93 | | 2.00 | | 2.00 | |
| Slipping and matting agent | CERAFLOUR950 (modified high density polyethylene wax) | BYK-Chemie GmbH | 100.0 | | | | | | | | |
| | CERAFLOUR988 (modified polyethylene wax) | BYK-Chemie GmbH | 100.0 | 5.00 | 15.50 | 5.00 | 15.75 | 5.00 | 15.50 | 5.00 | 15.50 |
| | RUBCOULEUR KL501(4M)-CL (Acrylic beads) | Dainichiseika Color & Chemicals Mfg. Co., Ltd. | 100.0 | | | | | | | | |

(continued)

| | Product name or component name or type | Manufacturer | Ratio of active component in each component *1 (mass%) | Manufacturing Example 1 | | Manufacturing Example 2 | | Manufacturing Example 3 | | Manufacturing Example 4 | |
|---|---|---|---|---|---|---|---|---|---|---|---|
| | | | | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) |
| Thickener | PRIMAL G111 E (Acrylic thickener) | The Dow Chemical Company | 11.0 | 1.00 | 0.34 | 1.00 | 0.35 | 1.00 | 0.34 | 1.00 | 0.34 |
| Preservative | San-ai bacAS-30 (isothiazoline compound, pyridine compound) | SAN-AI OIL CO., LTD. | 17.0 | 0.20 | 0.11 | 0.20 | 0.11 | 0.20 | 0.11 | 0.20 | 0.11 |

*1: Component from which a solvent (water) has been removed
*2: Ratio relative to 100 parts by mass of aqueous coating agent (parts by mass)
*3: Ratio relative to components in aqueous coating agent from which a solvent (water) has been removed

Table 2 (2/2)

| | Product name or component name or type | Manufacturer | Ratio of active component in each component *1 (mass%) | Manufacturing Example 5 | | Manufacturing Example 6 | | Manufacturing Example 7 | | Manufacturing Example 8 | |
|---|---|---|---|---|---|---|---|---|---|---|---|
| | | | | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) |
| Pigment dispersion | AC-FK52 (content of pigment 14%, dispersion for inkjet) | Dainichiseika Color & Chemicals Mfg. Co., Ltd . | 17.5 | 2.93 | 1.53 | 2.93 | 1.75 | 2.93 | 1.41 | 2.94 | 1.53 |
| Film-forming aid | Propylene glycol | | 100.0 | 1.50 | 4.46 | 1.50 | 5.13 | 1.50 | 4.13 | 1.50 | 4.46 |
| | Methanol | | 100.0 | | | | | | | | |
| | N-methyl pyrrolidone | | 100.0 | | | | | | | | |
| Emulsion | Acrylic polymer a | - | 43.4 | 27.83 | 35.92 | 13.69 | 20.32 | 43.39 | 51.81 | 27.83 | 35.91 |
| Polymer B | Polymerb | - | 19.5 | 56.94 | 33.02 | 71.08 | 47.39 | 41.38 | 22.20 | 56.93 | 33.02 |
| Surfactant | MEGAFAC F444 (fluorinated surfactant) | DIC Corporation | 100.0 | 0.10 | 0.30 | 0.10 | 0.34 | 0.10 | 0.28 | 0.10 | 0.30 |
| | BYK-345 (Polyether siloxane) | BYK-Chemie GmbH | 87.5 | 2.50 | 6.51 | 2.50 | 7.48 | 2.50 | 6.02 | 2.50 | 6.51 |
| Solvent | Water | | | 1.00 | | 2.00 | | 2.00 | | 1.00 | 0.00 |
| Slipping and matting agent | CERAFLOUR950 (modified high density polyethylene wax) | BYK-Chemie GmbH | 100.0 | | | | | | | 6.00 | 17.85 |
| | CERAFLOUR988 (modified polyethylene wax) | BYK-Chemie GmbH | 100.0 | | | 5.00 | 17.10 | 5.00 | 13.76 | | |
| | RUBCOULEUR KL501(4M)-CL (Acrylic beads) | Dainichiseika Color & Chemicals Mfg. Co., Ltd. | 100.0 | 6.00 | 17.85 | | | | | | |

| | Product name or component name or type | Manufacturer | Ratio of active component in each component *1 (mass%) | Manufacturing Example 5 | | Manufacturing Example 6 | | Manufacturing Example 7 | | Manufacturing Example 8 | |
|---|---|---|---|---|---|---|---|---|---|---|---|
| | | | | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) | Ratio *2 (parts by mass) | Ratio in active component *3 (mass%) |
| Thickener | PRIMAL G111 E (Acrylic thickener) | The Dow Chemical Company | 11.0 | 1.00 | 0.33 | 1.00 | 0.38 | 1.00 | 0.30 | 1.00 | 0.33 |
| Preservative | San-ai bacAS-30 (isothiazoline compound, compound) | SAN-AI OIL CO., LTD. | 17.0 | 0.20 | 0.10 | 0.20 | 0.12 | 0.20 | 0.09 | 0.20 | 0.10 |

*1: Component from which a solvent (water) has been removed
*2: Ratio relative to 100 parts by mass of aqueous coating agent (parts by mass)
*3: Ratio relative to components in aqueous coating agent from which a solvent (water) has been removed

EP 3 812 433 A1

Example 1

The aqueous coating agent is filled in a small-sized spray gun "W-71-2G" (manufactured by ANEST IWATA Corporation), the aqueous coating agent is applied to a plastic molding by spray coating, and a coating film was formed at the drying temperature and drying time shown in Table 3.

Examples 2-10, Comparative Examples 1, 2

A coating film was formed in the similar way to Example 1 except that the aqueous coating agent and a plastic molding, drying temperature and drying time were changed as shown in Table 3 and 4.

Table 3

| | | | | Example 1 | | Example 2 | | Example 3 | | Example 4 | | Example 5 | | Comparative Example 1 | | Comparative Example 2 | |
|---|---|---|---|---|---|---|---|---|---|---|---|---|---|---|---|---|---|
| Type of aqueous coating agent | | | | Manufacturing Example 1 | | Manufacturing Example 2 | | Manufacturing Example 3 | | Manufacturing Example 4 | | Manufacturing Example 5 | | Manufacturing Example 6 | | Manufacturing Example 7 | |
| Mass ratio [A/B] *1 | | | | 50/50 | | 50/50 | | 50/50 | | 50/50 | | 52/48 | | 30/70 | | 70/30 | |
| Type of plastic molding | | | | Polyamide resin | | Polyamide resin | | Polyamide resin | | Polyamide resin | | Polyamide resin | | Polyamide resin | | Polyamide resin | |
| | | | | Nylon-6 | | Nylon-6 | | Nylon-6 | | Nylon-6 | | Nylon-6 | | Nylon-6 | | Nylon-6 | |
| Evaluation | Appearance and adhesive property | Drying temperature | Drying time | Appearance | Adhesive property | Appearance | Adhesive property | Appearance | Adhesive property | Appearance | Adhesive property | Appearance | Adhesive property | Appearance | Adhesive property | Appearance | Adhesive property |
| | | 25°C | 1h | Good | 0 | Good | 0 | Good | 0 | Good | 2 | Good | 0 | Good | 5 | Good | 4 |
| | | | 6h | Good | 0 | Good | 0 | Good | 0 | Good | 2 | Good | 0 | Good | 4 | Good | 2 |
| | | | 24h | Good | 0 | Good | 0 | Good | 0 | Good | 1 | Good | 0 | Good | 2 | Good | 1 |
| | Drying property | Drying time (min) | | 40.0 | | 40.0 | | 35.0 | | 43.0 | | 40.0 | | 43.0 | | 41.0 | |
| | Abrasion resistance *2 | | | 2B | | 4B | | 4B | | 4B | | HB | | 4B | | 5B | |
| | Durability *3 | | | 2B | | 4B | | - | | - | | - | | - | | - | |

*1: Mass ratio of acrylic polymer A to polymer B in aqueous coating agent
*2: Result of pencil scratch test of coating film two day after formation of coating film
*3: Result of pencil scratch test of coating film after forming coating film and then leaving coating film for 24 hours under condition of temperature of 60°C and humidity of 90 %RH.

Table 4

| | | | | Example 6 | | Example 7 | | Example 8 | | Example 9 | | Example 10 | |
|---|---|---|---|---|---|---|---|---|---|---|---|---|---|
| Type of aqueous coating agent | | | | Manufacturing Example 8 | | Manufacturing Example 8 | | Manufacturing Example 8 | | Manufacturing Example 8 | | Manufacturing Example 8 | |
| Mass ratio [A/B] *1 | | | | 52/48 | | 52/48 | | 52/48 | | 52/48 | | 52/48 | |
| Type of resin | | | | Polystyrene resin | | Polycarbonate resin | | Polyester resin | | Polyamide rein | | Polyvinyl chloride resin | |
| | | | | ABS *1 | | PC *2 | | PET *3 | | Nylon-6 | | Hard polyvinyl chloride resin | |
| Evaluation | Appearance and adhesive property | Drying temperature | Drying time | Appearance | Adhesive property | Appearance | Adhesive property | Appearance | Adhesive property | Appearance | Adhesive property | Appearance | Adhesive property |
| | | 25°C | 1h | Good | 1 | Good | 3 | Good | 0 | Good | 0 | Good | 0 |
| | | | 6h | Good | 1 | Good | 3 | Good | 0 | Good | 0 | Good | 0 |
| | | | 24h | Good | 1 | Good | 2 | Good | 0 | Good | 0 | Good | 0 |
| | | 50°C | 30min | Good | 1 | Good | 0 | Good | 0 | Good | 0 | Good | 0 |
| | | 100°C | 5min | Good | 0 | Good | 0 | Good | 0 | Good | 0 | Good | 0 |
| | Drying property | Drying time (min) | | 21.5 | | 18.0 | | 18.0 | | 21.5 | | 20.5 | |
| *1: Acrylonitrile-butadiene-styrene copolymer resin *2: Polycarbonate *3: Polyethylene terephthalate | | | | | | | | | | | | | |

EP 3 812 433 A1

From the results in Table 3 and Table 4, it can be seen that the coating films using the aqueous coating agents of Example 1 to 10 have excellent concealing property. The coating films using the aqueous coating agents of Example 1 to 10 have superior adhesive property and abrasion resistance to those of Comparative Example 1 and 2. In addition, it can be seen that the coating films using the aqueous coating agents of Example 1 and 2 also have excellent durability.

Furthermore, from the results in Table 4, it can be seen that the coating films using the aqueous coating agents of Example 1 to 10 have excellent concealing property and adhesive property for a polystyrene resin, a polycarbonate resin, a polyester resin, a polyamide resin, a polyvinyl chloride resin.

**Claims**

1. An aqueous coating agent comprising an emulsion comprising an acrylic polymer A having an acid number of 50 mgKOH/g or less and a Tg of less than 50°C, a polymer B comprising one or more polymers selected from the group consisting of an acrylic polymer and an urethane polymer having an acid number of 60 mgKOH/g or more, a surfactant and a film-forming aid, wherein a mass ratio of the acrylic polymer A to the polymer B [A/B] is 35/65 or more and 65/35 or less.

2. The aqueous coating agent according to claim 1, wherein the acid number of the acrylic polymer A is 25 mgKOH/g or less.

3. The aqueous coating agent according to claim 1 or 2, wherein the Tg of the acrylic polymer A is 10°C or less.

4. The aqueous coating agent according to any one of claims 1 to 3, wherein the acid number of the polymer B is 100 mgKOH/g or more.

5. The aqueous coating agent according to any one of claims 1 to 4, wherein the polymer B is an acrylic polymer.

6. The aqueous coating agent according to any one of claims 1 to 5, wherein the emulsion comprises a hydrazide compound.

7. The aqueous coating agent according to any one of claims 1 to 6, wherein a boiling point of the film-forming aid is 220°C or less.

8. The aqueous coating agent according to any one of claims 1 to 7, wherein the film-forming aid is a glycol compound.

9. The aqueous coating agent according to any one of claims 1 to 8, wherein the film-forming aid is propylene glycol.

10. The aqueous coating agent according to any one of claims 1 to 9, wherein the surfactant is a fluorinated surfactant.

11. The aqueous coating agent according to any one of claims 1 to 9, wherein the surfactant is a silicone surfactant.

12. The aqueous coating agent according to any one of claims 1 to 11, wherein the aqueous coating agent further comprises a slipping agent.

13. The aqueous coating agent according to any one of claims 1 to 12, wherein the aqueous coating agent is used for spray coating.

14. The aqueous coating agent according to any one of claims 1 to 13, wherein the aqueous coating agent is used for a plastic molding.

15. The aqueous coating agent according to claim 14, wherein the plastic molding is one or more selected from the group consisting of a polystyrene resin, a polycarbonate resin, a polyester resin, a polyamide resin and a polyvinyl chloride resin.

16. A paint for a plastic by means of the aqueous coating agent according to any one of claims 1 to 15.

## INTERNATIONAL SEARCH REPORT

| | International application No. |
|---|---|
| | PCT/JP2019/022796 |

| A. CLASSIFICATION OF SUBJECT MATTER |
|---|
| Int. Cl. C09D133/00(2006.01)i, C09D5/02(2006.01)i, C09D7/63(2018.01)i, C09D175/04(2006.01)i |
| According to International Patent Classification (IPC) or to both national classification and IPC |

| B. FIELDS SEARCHED |
|---|
| Minimum documentation searched (classification system followed by classification symbols) |
| Int. Cl. C09D133/00, C09D5/02, C09D7/63, C09D175/04 |

Documentation searched other than minimum documentation to the extent that such documents are included in the fields searched

| Published examined utility model applications of Japan | 1922-1996 |
|---|---|
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2009-507082 A (NIPPON SHOKUBAI CO., LTD.) 19 | 1-9, 12-16 |
| Y | February 2009, claims, examples, paragraphs [0051]-[0059] & JP 5554495 B2 & WO 2007/026949 A1 | 6, 10-11 |
| X | JP 2011-144303 A (KONICA MINOLTA IJ TECHNOLOGIES, INC.) 28 July 2011, claims, examples, paragraphs | 1-5, 7-11, 14-16 |
| Y | [0085]-[0088], [0095]-[0100] (Family: none) | 10-11 |
| X | WO 94/07959 A1 (YUHO CHEMICALS INC.) 14 April | 1-5, 7-16 |
| Y | 1994, claims, examples, page 5, upper right column, paragraph [0002] & JP 5-5083 A & US 5541265 A, column 7, line 49 to column 8, line 1 & EP 664324 A1 | 6, 10-11 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18.07.2019 | 06.08.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2019/022796 |

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 4-154879 A (YUSHIRO CHEMICAL INDUSTRY CO., LTD.) 27 May 1992, examples (Family: none) | 10-11 |
| A | JP 2006-045510 A (TOYOTA MOTOR CORP.) 16 February 2006, paragraph [0041] & US 2006/0030651 A1, paragraph [0091] & FR 2874018 A1 & CN 1733851 A | 1-16 |
| E, X | JP 2019-094423 A (DIC GRAPHICS CORP.) 20 June 2019, claims, examples (Family: none) | 1-5, 7-16 |

Form PCT/ISA/210 (continuation of second sheet) (January 2015)

**EP 3 812 433 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58042438 A